# EUROPÄISCHE PATENTANMELDUNG

(11) **EP 0 835 989 A1**
(43) Veröffentlichungstag der Anmeldung: **15.04.1998**
(21) Anmeldenummer: 96114677.6
(22) Anmeldetag: 13.09.1996
(51) Int. Cl.: F01P 3/20

(54) **Fahrzeug mit Kühlanordnung für einen Verbrennungsmotor**

(71) Anmelder: SMH Management Services AG, CH-2501 Biel (CH)
(72) Erfinder: Klukowski, Christoph, 8905 Arni (CH); Apter, Robert, 1400 Yverdon-les-Bains (CH)
(74) Vertreter: Thérond, Gérard Raymond

(57) **Zusammenfassung**

Die Kühlanordnung (10, 30) für einen Verbrennungsmotor (15) eines Fahrzeug soll so ausgestaltet werden, dass einerseits die hinsichtlich Emission und Verbrauch optimale Arbeitstemperatur des Verbrennungsmotors (15) gewährleistet und anderseits noch mindestens eine weitere, Wärme erzeugende Komponente (11) gekühlt und ebenfalls auf ihrer optimalen Arbeitstemperatur gehalten werden kann.

Dadurch, dass der Verbrennungsmotor (15) und ein mit diesem in mechanischer Antriebsverbindung stehender Generator (11) im Kühlkreislauf in Serie angeordnet sind, kann auf eine zusätzliche Kühlvorrichtung für den Generator (11) verzichtet werden. Ausserdem entspricht das Temperaturniveau des aus dem Generator (11) austretenden Kühlmittels vortrefflich dem hinsichtlich Minimalemission und -verbrauch anzustrebenden Eingangs-Temperaturniveau des Verbrennungsmotors (15). Die In-Serie-Anordnung des Verbrennungsmotors (15) und des Generators (11) ermöglicht für beide Komponenten einen einfachen, problemlos steuerbaren, nicht störungsanfälligen Betrieb auf ihrer jeweils optimalen Arbeitstemperatur, ohne dass zusätzliche Temperaturanpassungs-Einrichtungen vorzusehen sind.

## Beschreibung

Die Erfindung betrifft ein Fahrzeug gemäss dem Oberbegriff von Anspruch 1.

Grundsätzlich ist es aus Kostengründen sinnvoll, möglichst eine einzige Kühlanordnung für alle im Fahrzeug zu kühlenden Komponenten vorzusehen. Da aber jede Komponente nur in einem bestimmten, oft in engen Grenzen zu haltenden Temperaturbereich optimal arbeiten kann, ist eine Zusammenlegung der einzelnen Kühlkreisläufe mit grösserem technischen Aufwand verbunden, so dass daraus unter dem Strich kaum eine Kosteneinsparung hervorgeht.

Zu diesen Komponenten zählt beispielsweise ein Verbrennungsmotor, bei welchem ein hinsichtlich Emission und Verbrauch optimaler Betrieb nur bei einer bestimmten Arbeitstemperatur möglich ist. Die Kühlvorrichtung hat eine dementsprechend gezielt dossierte Wärmeabfuhr sicherzustellen.

Besondere Aufmerksamkeit gilt den Fahrzeugen mit einem Hybridantrieb, insbesondere mit einem Serie-Hybridantrieb, bei welchen im allgemeinen von mindestens vier zu kühlenden Komponenten auszugehen ist. Es handelt sich dabei um einen Verbrennungsmotor, eine an dessen Kurbelwelle gekoppelte elektrische Maschine, eine Leistungselektronik sowie mindestens eine weitere elektrische Maschine, die in Antriebsverbindung mit den Rädern steht.

Der Erfindung liegt daher die Aufgabe zugrunde, ein Fahrzeug mit einer einfachen, kostengünstigen Kühlanordnung für einen Verbrennungsmotor zu schaffen, bei welcher
- einerseits die hinsichtlich Emission und Verbrauch optimale Arbeitstemperatur des Verbrennungsmotors gewährleistet und
- anderseits noch mindestens eine weitere, Wärme erzeugende Komponente gekühlt und ebenfalls auf ihrer optimalen Arbeitstemperatur gehalten werden kann.

Die Lösung der erfindungsgemässen Aufgabe ergibt sich aus den Merkmalen des Anspruchs 1.

Bevorzugte Ausführungsformen sind in den abhängigen Ansprüchen gegeben.

Dadurch, dass für das erfindungsgemässe Fahrzeug eine Kühlanordnung für einen Verbrennungsmotor vorgesehen ist, welche die mit diesem in Antriebsverbindung stehende elektrische Maschine in denselben Kühlkreislauf aufnimmt, kann auf eine zusätzliche, kostenverursachende Kühlvorrichtung verzichtet werden. Die In-Serie-Anordnung des Verbrennungsmotors und der elektrischen Maschine ermöglicht für beide Komponenten einen einfachen, problemlos steuerbaren, nicht störungsanfälligen Betrieb auf ihrer jeweiligen, optimalen Arbeitstemperatur, ohne dass zusätzliche Temperaturanpassungs-Einrichtungen vorgesehen werden müssen. Dabei entspricht das aus der elektrischen Maschine austretende Kühlmittel-Temperaturniveau vortrefflich dem hinsichtlich Minimalemission und -verbrauch anzustrebenden Eingangs-Temperaturniveau des Verbrennungsmotors.

Dadurch, dass nur eine einzige zusätzliche Komponente in den Kühlkreislauf eingebunden ist, muss die auf dem Verbrennungsmotor meistens schon fest installierte Kühlmittelpumpe nicht durch eine leistungsstärkere ausgetauscht werden.

Ein weiterer Vorteil der erfinderischen Lösung geht aus der benachbarten Anordnung des Verbrennungsmotors und der elektrischen Maschine hervor. Mitunter können beide Komponenten als Einheitsmodul inklusive Kühlmittelpumpe vorgesehen werden.

Eine vorteilhafte Ausgestaltung des erfindungsgemässen Fahrzeuges liegt in der Aufteilung der Kühlanordnung durch einen Dreiweg-Thermostat in zwei Kühlkreisläufe, wobei nur der eine einen Kühler aufweist, während der andere die Abwärme der elektrischen Maschine und des Verbrennungsmotors ohne Wärmeabgabe an die Aussenwelt intern zur schnelleren Aufwärmung des Kühlmittels nutzt, so dass der Verbrennungsmotor baldmöglichst nach einem Kaltstart auf der optimalen Betriebstemperatur arbeiten kann.

Eine weitere vorteilhafte Ausführungsform der Erfindung sieht einen im Kühlkreislauf angeordneten Wärmespeicher vor, welcher dem Kühlmittel während des vorangehenden Fahrzeugeinsatzes Wärmeenergie entzieht. Die zwischengespeicherte Wärmeenergie dient beim nächsten Starten des Verbrennungsmotors zur Vorwärmung des Kühlmittels wiederum mit dem Ziel, die optimalen Betriebstemperaturen möglichst kurzfristig zu erreichen. Darunter fällt auch die Betriebstemperatur der elektrischen Maschine, da dessen Wirkungsgrad ebenfalls nur bei einer bestimmten Temperatur maximal ist.

Sofern der Wärmespeicher einen elektrischen Heizkörper aufweist, kann die Aufwärmphase nochmals verkürzt werden.

Ferner kann bei einem Fahrzeug mit Hybridantrieb eine weitere Kühlanordnung für die Antriebs-Elektromotoren und deren in der Nähe angeordnete Leistungselektronik bzw. Ansteuerschaltung vorgesehen werden, da sich die jeweiligen Temperaturniveaus ebenfalls bestens zur Vereinigung der Kühlkreisläufe eignen. Beispielsweise kann es sich bei der Leistungselektronik um einen DC/AC-Konverter handeln, da Fahrzeuge mit Hybridantrieb meistens noch über einen elektrischen Energiespeicher, d.h. eine aufladbare Batterie verfügen.

Da bei einem Fahrzeug mit Serie-Hybridantrieb nebst dem Generator auch die Antriebsmotoren elektrische Maschinen sind, könnte grundsätzlich auch vorgesehen werden, anstelle des Generators die Antriebsmotoren in den Kühlkreislauf des Verbrennungsmotors einzuschalten. Dabei kann es sich beispielsweise um Radnaben-Asynchronmotoren handeln. Im allgemeinen liegt die Arbeitstemperatur des Generators allerdings auf einem höheren Niveau als die der Antriebs-Elektromotoren. Dies ist darauf zurückzuführen, dass die Lager der mit den Rädern in Antriebsverbindung stehenden Antriebsmotoren grösseren mechanischen Kräften und ruckartigeren Lastwechseln ausgesetzt sind, als dies beim Generator der Fall ist. Hinzu kommt, das die maximale Drehzahl der Antriebsmotoren meistens etwa doppelt so hoch ist, wie diejenige des Generators. Beide Faktoren führen dazu, dass die Lagertemperatur der Antriebsmotoren niedriger zu halten ist, als diejenige des Generators, sofern von beiden Komponenten eine vergleichbare Lebensdauer erwartet wird.

Handelt es sich beim erfindungsgemässen Fahrzeug nicht um ein Fahrzeug mit Hybridantrieb, sondern um ein herkömmliches Kraftfahrzeug, so ist nach der Erfindung der mit dem Verbrennungsmotor in Antriebsverbindung stehende Alternator in den Kühlkreislauf des Verbrennungsmotors einzubinden, woraus ebenfalls die genannten Vorteile entstehen.

Im ganzen Text ist anstelle von elektrischen Maschinen oft von einem Generator und Antriebsmotoren die Rede. Es sei jedoch darauf hingewiesen, dass unter "Generator" eine elektrische Maschine gemeint ist, die gegebenenfalls auch als Elektromotor betrieben werden kann, um den Verbrennungsmotor zu starten oder diesen beispielsweise bei einer anstehenden Drehzahlzunahme zu unterstützen und dadurch bessere Betriebsbedingungen zu schaffen. Analog dazu ist unter "Antriebsmotor" eine elektrische Maschine zu verstehen, die zwecks Energierückgewinnung bzw. zwecks sogenannter Rekuperation auch als Generator wirkend kinetische Energie des Fahrzeuges in elektrische wandeln kann.

Als Kühlmittel kann beispielsweise eine Wasser-Glycol-Mischung eingesetzt werden, doch gehen aus der erfindungsgemässen Lösung auch unter Verwendung eines anderen Kühlmittel dieselben Vorteile hervor.

Ausführungsbeispiele der Erfindung sind in den Zeichnungen dargestellt und in der nachfolgenden Beschreibung näher erläutert. Es zeigen:
- Fig.1 eine Prinzipdarstellung eines ersten Ausführungsbeispiels und
- Fig.2 eine Prinzipdarstellung eines zweiten Ausführungsbeispiels
einer Kühlanordnung des erfindungsgemässen Fahrzeuges.

In folgender Beschreibung sind einige Begriffe zu Gunsten der Übersichtlichkeit in gekürzter Form aufgeführt. In diesem Sinne sind unter einem "Eingangs- bzw. Ausgangsanschluss" ein "Kühlmitteleingangs- bzw. -ausgangsanschluss" und unter einer "Leitung" bzw. einem "Leitungsabschnitt" eine "Kühlmittelleitung" bzw. ein "Kühlmittelleitungsabschnitt" zu verstehen.

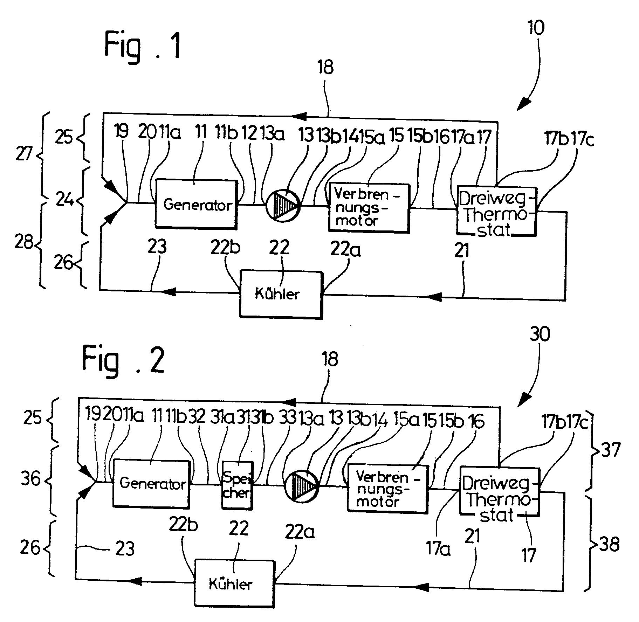

Die in Figur 1 dargestellte Kühlanordnung 10 eines Fahrzeuges zeigt eine als Generator betreibbare, elektrische Maschine 11 mit einem Eingangsanschluss 11a und einem Ausgangsanschluss 11b. Vom Eingangsanschluss 11b führt ein Leitungsabschnitt 12 zum Eingangsanschluss 13a einer Kühlmittelpumpe 13, über deren Ausgangsanschluss 13b ein weiterer Leitungsabschnitt 14 zum Eingangsanschluss 15a eines Verbrennungsmotors 15 weiterführt. Zwischen dem Verbrennungsmotor 15 und dem Generator 11 besteht eine in Fig.1 nicht dargestellte mechanische Antriebsverbindung. Ein Leitungsabschnitt 16 verbindet den Ausgangsanschluss 15b des Verbrennungsmotors 15 mit dem Eingangsanschluss 17a eines Dreiweg-Thermostates 17, welches seinerseits über zwei Ausgangsanschlüsse 17b und 17c verfügt.

Der erste der beiden Ausgangsanschlüsse 17b führt über einen Leitungsabschnitt 18 zu einem Sammelpunkt 19, der über einen Leitungsabschnitt 20 auf den Eingangsanschluss 11a des Generators 11 zurückführt.

Der zweite 17c der beiden Ausgangsanschlüsse 17b und 17c des Dreiweg-Thermostates 17 hingegen führt über einen Leitungsabschnitt 21 auf den Eingangsanschluss 22a eines Kühlers 22, an dessen Ausgangsanschluss 22b ein weiterer Leitungsabschnitt 23 anschliesst und ebenfalls zum Sammelpunkt 19 und zum Eingangsanschluss 11a des Generators 11 zurückführt.

Vom Sammelpunkt 19 ausgehend bildet die Reihenschaltung des Generators 11, der Kühlmittelpumpe 13, des Verbrennungsmotors 15 bis zum Drehweg-Thermostat 17 eine erste Kühlstrecke 24 der Kühlanordnung 10. In Abhängigkeit der Schaltstellung des Dreiweg-Thermostates 17 schliesst entweder eine zweite, von dessen Ausgangsanschluss 17b über den Leistungsabschnitt 18 auf den Sammelpunkt 19 führende Kühlstrecke 25 den Kreis, oder eine dritte Kühlstrecke 26, welche den zweiten Ausgangsanschluss 17c über den Kühler 22 mit dem Sammelpunkt 19 verbindet.

Die beiden Kühlstrecken 24 und 25 bilden zusammen einen ersten Kühlmittelkreislauf 27, auch Kleinkreislauf 27 genannt, während die Kühlstrecke 24 mit der Kühlstrecke 26 einem zweiten Kühlmittelkreislauf 28 entspricht, der auch mit Grosskreislauf 28 bezeichnet ist.

Bei der folgenden Beschreibung der Funktionsweise der in Fig.1 wiedergegebenen Kühlanordnung 10 wird von einer anfänglichen Kühlmitteltemperatur von 20°C ausgegangen, wie sie beispielsweise von Inbetriebnahme eines Verbrennungsmotors vorliegt. Die optimale Betriebstemperatur des Verbrennungsmotors 15 und des Generators 11 wird erst allmählich erreicht, wobei diese Temperaturwerte selbstverständlich in Bezug zu den jeweils verwendeten Maschinen stehen und je nach Typ etwas anders ausfallen können. Die im folgenden angegebenen Temperaturwerte gehen aus Messungen mit einem bestimmten Verbrennungsmotor und einem bestimmten Generator hervor und dienen demnach ausschliesslich der Erläuterung der Funktionsweise der Kühlanordnung 10 im Sinne eines Beispiels.

Die in Fig.1 an verschiedenen Stellen eingetragenen Pfeile zeigen die Flussrichtung des Kühlmittels an.

Die Kühlmitteltemperatur am Eingangsanschluss 11a und am Ausgangsanschluss 11b unterscheiden sich wenig, da der Generator 11 eine Temperaturerhöhung von etwa nur einem Grad hervorruft.

Die anschliessende Kühlmittelpumpe 13 bewirkt keinen nennenswerten Temperaturanstieg des Kühlmittels, so dass die Temperatur am Eingangsanschluss 15a des Verbrennungsmotors 15 nicht wesentlich höher als diejenige am Eingangsanschluss 11a des Generators 11 ist.

Der Verbrennungsmotor 15 seinerseits bewirkt jedoch einen Kühlmittel-Temperaturanstieg von 5°C bis 7°C.

Der Dreiweg-Thermostat 17 arbeitet selbsttätig mit einer Schwellentemperatur von ungefähr 90°C, welche der optimalen Temperatur am Ausgangsanschluss 15b des Verbrennungsmotors 15 entspricht. Liegt die Kühlmitteltemperatur am Eingangsanschluss 17a unterhalb 85° bis 90°C, was in der an dieser Stelle beschriebenen Aufwärmphase der Fall ist, so wird das Kühlmittel über die erste Kühlstrecke 25 geleitet, d.h. dass der Kleinkreislauf 27 vom Kühlmittel durchströmt wird, während der Grosskreislauf 28 mit dem Kühler 22 verriegelt bzw. ausgeschaltet ist. Da der Kleinkreislauf 27 keinen Kühler einschliesst, steigt die Kühlmitteltemperatur fortlaufend bis zum Erreichen der Schwellentemperatur von 90°C an.

Der bei dieser Temperatur selbsttätig schaltende Dreiweg-Thermostat 17 blockiert dann den Kleinkreislauf 27 und leitet das Kühlmittel über die freigegebene Kühlstrecke 26 bzw. über den Kühler 22 innerhalb des Grosskreislaufes 28. Der Kühler ist derart ausgebildet, dass die Kühlmitteltemperatur an seinem Ausgangsanschluss 22b etwa 75°C bis 85°C beträgt. Bei dieser Betriebssituation kann, wie erwähnt, von einer Temperaturdifferenz zwischen Eingangs- 15a und Ausgangsanschluss 15b des Verbrennungsmotors 15 von 5°C bis 7°C ausgegangen werden.

Falls die Kühlmitteltemperatur ausgangsseitig des Verbrennungsmotors 15 95°C übersteigen sollte, wird zusätzlich ein in Fig.1 nicht dargestellter Ventilator in Betrieb genommen, der für eine verstärkte Wärmeabgabe des Kühlers 22 sorgt.

Fig.2 zeigt eine weiteres Ausführungsbeispiel einer mit 30 bezeichneten Kühlanordnung. Dabei sind gleiche Teile gegenüber Fig.1 mit gleichen Bezugsziffern gekennzeichnet. Im Gegensatz zu Fig.1 ist zwischen dem Generator 11 und dem Verbrennungsmotor 15 noch ein Wärmespeicher 31 zwischengeschaltet. Genauer ist der Ausgangsanschluss 11b des Generators 11 über einen Leitungsabschnitt 32 mit dem Eingangsanschluss 31a des Wärmespeichers 31 sowie dessen Ausgangsanschluss 31b über einen Leitungsabschnitt 33 mit dem Eingangsanschluss 13a der Kühlmittelpumpe 13 verbunden.

Vom Sammelpunkt 19 ausgehend und bis zum Drehweg-Thermostat 17 führend entspricht in Fig.2 die Reihenschaltung des Generators 11 mit dem Wärmespeicher 31, der Kühlmittelpumpe 13 und dem Verbrennungsmotor 15 einer vierten Kühlstecke 36.

Die beiden Kühlstrecken 36 und 25 bilden zusammen einen dritten Kühlmittelkreislauf 37, auch Kleinkreislauf 37 genannt während die Kühlstecke 36 mit der Kühlstecke 26 einen vierten Kühlmittelkreislauf 38 ergibt, der auch mit Grosskreislauf 38 bezeichnet ist.

Wiederum zeigen die in Fig.2 an verschiedenen Stellen eingetragenen Pfeile die Flussrichtung des Kühlmittels.

Im Unterschied zu Fig.1 weist die Kühlanordnung 30 von Fig.2 den Wärmespeicher 31 auf. Dieser dient dazu, das Kühlmittel während einer gewissen Zeit vor und/oder nach dem Anlassen des Verbrennungsmotors 15 aufzuwärmen. Dies ist besonders dann vorteilhaft, wenn das Kühlmittel zunächst sehr kalt ist, wie beispielsweise im Winter.

Dadurch, dass der Wärmespeicher 31, der einem gegen aussen wärmeisolierten Boiler entspricht, Wärmeenergie vom jeweils vorgängigen Betrieb des Verbrennungsmotors 15 speichert und beim folgenden Start, insbesondere Kaltstart wieder an den Kleinkreislauf 37 zurückgibt, kann die Einsatzzeit des Kleinkreislaufes 37 verkürzt und die optimale Betriebstemperatur vom Generator 11 und Verbrennungsmotor 15 wiederum schneller erreicht werden.

Der Wärmespeicher 31 ist deshalb zwischen Generator 11 und Verbrennungsmotor 15 und nicht ausgangsseitig des letzteren geschaltet, da ohnehin nur ein im Verhältnis zur erzeugten Verlustwärme des Verbrennungsmotors 15 kleiner Wärmemengeteil gespeichert werden muss.

Selbstverständlich sind zwischen Fig.1 und Fig.2 die verschiedensten Mischformen denkbar.

Grundsätzlich ist es wenig bedeutsam, an welcher Stelle in der Kühlanordnung die Kühlmittelpumpe 13 angeordnet ist. Vorteilhafterweise ist diese in der Kühlstrecke 24 bzw. 36 unterzubringen, also auch beispielsweise eingangsseitig des Generators 11. Ausgangsseitig des Dreiweg-Thermostates 17 wären zwei Pumpen notwendig, d.h. jeweils eine für den Klein- 27 bzw. 37 und den Grosskreislauf 28 bzw. 38.

Ebenso kann der Speicher 31 auch an einer andern Stelle in der Kühlanordnung angeordnet sein, allerdings nicht direkt ausgangsseitig des Kühlers 22.

Sofern der in Fig.2 gezeigte Wärmespeicher 31 noch einen nicht gezeigten, elektrischen Heizkörper aufweist, kann die Aufwärmphase nochmals verkürzt werden. Falls das Fahrzeug über einen Katalysator verfügt, kann dieser gleichzeitig mit dem Heizkörper durch dieselbe Vorrichtung ein- und ausgeschaltet werden. Der Heizkörper kann grundsätzlich auch ausserhalb des Wärmespeichers vorgesehen werden, muss jedoch in Wärmeübertragungsverbindung mit dem Kleinkreislauf 37 stehen.

Der Wärmespeicher 31 kann derart ausgebildet sein, dass er entweder einen Teil des Kühlmittels speichert oder aber dessen Wärmeenergie über einen Wärmetauscher einer weiteren, vom Kühlmittel getrennten Flüssigkeit übergibt.

Weiter kann es vorteilhaft sein, den Kühler 22 mit einem Ausgleichsbehälter auszurüsten und/oder einen Ladeluftkühler und/oder Ölkühler vorzusehen.

Übrigens kann der Ladeluftkühler eines eventuellen Turboladers mit dem Kühler 22 als gemeinsame Einheit ausgebildet sein.

Bis anhin wurde als thermische Energiequelle von einem Verbrennungsmotor gesprochen. Es kann sich dabei jedoch grundsätzlich auch um eine Gasturbine oder eine Brennstoffzelle oder andere Energiequellen handeln, sofern deren Betriebstemperatur mit derjenigen des Generators in einfacher Weise eine Vereinigung der Kühlsysteme erlaubt.

Selbstverständlich ist es auch möglich, zusätzlich eine dritte Komponente in den Kühlkreislauf einzubinden, vorausgesetzt, dass ein optimaler Betrieb besonders des Verbrennungsmotors dadurch nicht beeinträchtigt wird. Dabei kann es sich beispielsweise um eine Motor-Management-Einheit handeln, welche den Verbrennungsmotor und dessen Zusammenspiel mit dem Generator regelt.

## Patentansprüche

1. Fahrzeug mit einer Kühlanordnung (10; 30) für einen Verbrennungsmotor (15), der in mechanischer Antriebsverbindung mit einer als Generator betreibbaren, elektrischen Maschine (11) steht, dadurch gekennzeichnet, dass die Kühlanordnung (10; 30) einen von einem Kühlmittel durchströmten Kühlkreislauf (27, 28; 37, 38) aufweist, in welchem die elektrische Maschine (11) sowie der Verbrennungsmotor (15) in Reihe angeordnet sind.

2. Fahrzeug nach Anspruch 1, dadurch gekennzeichnet, dass im Kühlkreislauf (27, 28; 37, 38) eine Kühlmittel-Fliessrichtung vorgebendes Fördermittel (13) vorgesehen ist und dass die elektrische Maschine (11) in Bezug auf diese Kühlmittel-Fliessrichtung vor dem Verbrennungsmotor (15) angeordnet ist.

3. Fahrzeug nach Anspruch 1 oder 2, dadurch gekennzeichnet, dass das Fahrzeug einen Hybridantrieb aufweist.

4. Fahrzeug nach einem der vorangehenden Ansprüche, dadurch gekennzeichnet, dass der Kühlkreislauf (27, 28; 37, 38) einen Teilbereich (24; 36) mit einer Kühlmittel-Eingangsstelle (19) und einer Kühlmittel-Ausgangsstelle (16; 35) aufweist, dass die Kühlmittel-Ausgangsstelle (16; 35) auf ein Dreiweg-Schaltorgan (17) mit zwei Kühlmittelausgängen (17b, 17c) führt und dass ein erster der beiden Kühlmittelausgänge (17b) im wesentlichen direkt, und ein zweiter (17c) über einen Kühler (22) auf die Kühlmittel-Eingangsstelle (19) zurückführt.

5. Fahrzeug nach Anspruch 4, dadurch gekennzeichnet, dass das Dreiweg-Schaltorgan (17) als bei einer bestimmten Kühlmitteltemperatur selbsttätig schaltender Dreiweg-Thermostat ausgebildet ist.

6. Fahrzeug nach einem der vorangehenden Ansprüche, dadurch gekennzeichnet, dass ein Wärmespeicher (31) in Reihe zur elektrischen Maschine (11) und zum Verbrennungsmotor (15) angeordnet ist.

7. Fahrzeug nach einem der vorangehenden Ansprüche, dadurch gekennzeichnet, dass ein elektrischer Heizkörper in Reihe zur elektrischen Maschine (11) und zum Verbrennungsmotor (15) angeordnet ist.
